# EUROPÄISCHE PATENTSCHRIFT

(11) **EP 2 154 497 B1**
(45) Veröffentlichungstag und Bekanntmachung des Hinweises auf die Patenterteilung: **03.10.2018**
(21) Anmeldenummer: 09007347.9
(22) Anmeldetag: 03.06.2009
(51) Int. Cl.: G01H 1/00, G01M 13/04

(54) **Vorrichtung zur Lagerdiagnose an Exzenterwellen von Stopfmaschinen mittels Schwingungsaufnehmen**
Device for storage diagnosis on eccentric shafts of tamping machines using oscillation dies
Dispositif de diagnostic de stockage sur des arbres excentriques de machines à bourrer à l'aide de récepteurs d'oscillations

(30) Priorität: 04.08.2008 DE 202008010351 U
(43) Veröffentlichungstag der Anmeldung: 17.02.2010
(73) Patentinhaber: Deutsche Bahn AG, 10785 Berlin (DE)
(72) Erfinder: Tangermann, Steffen, 30419 Hannover (DE); Seifried, Wolfgang, 14473 Potsdam (DE)

(56) Entgegenhaltungen:
- EP-A2- 1 857 982
- US-A1- 2004 138 832

## Beschreibung

Die Erfindung betrifft eine Vorrichtung zur Lagerdiagnose an Exzenterwellen von Gleisstopfmaschinen mittels einer Schwingungsmessvorrichtung mit Schwingungsaufnehmern.

Aus EP 1 857 982 A2 ist eine Vorrichtung zur Erfassung von Betriebszuständen und Komponentenzuständen von Nebenfahrzeugen, insbesondere Gleisbaumaschinen bekannt. Dabei erfassen Sensoren den Zustand verschiedener Komponenten des Nebenfahrzeugs. Des Weiteren nimmt mindestens ein Diagnosesystem das Ausgangssignal der Sensoren auf und übermittelt mithilfe eines Datenübertragungssystems die in dem mindestens einen Diagnosesystem abgelegten Daten an mindestens eine stationäre Datenbank.

Die erfindungsgemäße Vorrichtung unterscheidet sich von dem Diagnosesystem aus der EP 1 857 982 A2 dadurch, dass die zu messenden Parameter die mittlere Schwinggeschwindigkeit bzw. Schwingbeschleunigung sind und dass die mittlere Schwinggeschwindigkeit nur dann gemessen wird, wenn der Exzenterwellenantrieb in Vibrationsbetrieb ist und die durch die Exzenterwellen angetriebenen Stopfpickel der Stopfmaschine sich außerhalb des Schotterbettes befinden und die Schwingbeschleunigung nur dann gemessen wird, wenn die Messeinrichtung das Triggersignal "Arbeitsbetrieb ein" empfängt.

Gleisstopfmaschinen sind Nebenfahrzeuge, also gleisfahrbare Fahrzeuge, die für die innerbetriebliche Verwendung vorgesehen sind und nach der Definition der Eisenbahn-Bau- und Betriebsordnung (EBO) - DS 300 - nicht zu den Regelfahrzeugen und nach der Definition der Fahrdienstvorschrift - DS 408 - nicht zu den Kleingeräten gehören.Nebenfahrzeuge werden eingeteilt in Nebenfahrzeuge mit Kraftantrieb und Nebenfahrzeuge ohne Kraftantrieb. Die Nebenfahrzeuge mit Kraftantrieb werden eingeteilt in gleisfahrbare Baumaschinen, Bahndiensttriebwagen, Gleiskraftfahrzeuge und Zweiwegefahrzeuge. Gleisfahrbare Baumaschinen sind hierbei Nebenfahrzeuge, die vorwiegend der Unterhaltung und Erneuerung des Oberbaus dienen, insbesondere Gleisstopfmaschinen und Schotterplaniermaschinen. Von der DB Netz Instandsetzung Maschinenpool werden insbesondere folgende Stopfmaschinen betrieben:
- Gleisstopfmaschinen
- Universalstopfmaschinen
- Einzelfehlerstopfmaschinen

Um eine zukünftige Verbesserung des Fahrwegzustandes bei gleichen oder knapper werdenden Finanzmitteln zu gewährleisten, muss die Effizienz der Fahrweginstandhaltung gesteigert werden.

Des Weiteren werden an Gleisstopfmaschinen künftig höhere Anforderungen an die Verfügbarkeit gestellt. Daher erfolgt die Ausrüstung hochwertiger Gleisstopfmaschinen mit einem Betriebsdatenerfassungs- und Diagnosesystem.

Die Stopfaggregate sind die am stärksten beanspruchten Bauteile einer Gleisstopfmaschine.

Die Betriebssicherheit der Stopfaggregate ist daher ein wesentlicher Faktor für die uneingeschränkte Einsatzfähigkeit einer Gleisstopfmaschine.

Um den Schotter bei der Gleislageerneuerung einer Schienenfahrbahn unter den Schwellen zu verdichten, tauchen die Stopfpickel einer Gleisstopfmaschine bis zu einer definierten, von der Schwellenbauform abhängigen Tiefe in das Schotterbett ein und schieben dann durch eine hydraulisch erzwungene Beistellbewegung den Schotter unter die Schwelle.

Zur Optimierung dieses Vorganges werden die Stopfpickel in eine definierte Vibrationsbewegung versetzt, welche das "Fliessen" des Schotters und die Verdichtung unter den Schwellen verbessert.

Diese Vibrationsbewegung wird in der Regel durch hydraulisch angetriebene, exzentrisch drehende Wellenantriebe erzeugt.

Aufgrund der bewusst aufgebrachten exzentrischen Bewegung der Stopfpickelantriebe sind die Lagerungen derselben einem starken Verschleiß ausgesetzt. Im Rahmen der Betriebsdatendiagnose müssen die Exzenterwellenlagerungen der Stopfpickelantriebe deshalb auf ihre Funktionsfähigkeit, ihren Zustand und ihren Wartungsbedarf hin überwacht werden.

Zur Überwachung des Lagerzustandes der Exzenterwellenlagerungen der Stopfpickelantriebe wird - je nach Ausführung des Stopfaggregates als Ein- oder Mehrschwellenaggregat oder als teilbares Weichenstopfaggregat - je Exzenterwellenantrieb ein Schwingungsaufnehmer am Lagerbock des Antriebes platziert.

Das zentrale Problem bei der Lagerdiagnose der Exzenterwellen besteht darin, sämtliche, die eigentliche Schwingungsmessung überlagernden Schwingungen des Stopfaggregates auszublenden.

Es ist somit Aufgabe der Erfindung, eine Vorrichtung zur Lagerdiagnose an Exzenterwellen von Gleisstopfmaschinen mittels Schwingungsaufnehmern bereitzustellen, mit der einerseits eine Vermeidung von Ausfällen, Folgeschäden und unnötig langen Stillstandszeiten durch Nichterkennung kritischer Zustände sowie andererseits eine zielgerichtete Planung und Vorbereitung von Instandsetzungsmaßnahmen gewährleistet wird.

Diese Aufgabe wird in Verbindung mit dem Oberbegriff des Anspruches 1 erfindungsgemäß durch die in Anspruch 1 angegebenen Merkmale gelöst.

Die Unteransprüche beinhalten vorteilhafte Ausführungsformen der erfindungsgemäßen Lösung aus Anspruch 1.

Mit der Erfindung sollen die bisherigen starren Wartungsintervalle durch eine zustandsbezogene, d.h. verschleißabhängige Wartung ersetzt werden. Durch die verbesserte zustandsbezogene Wartung wird ein auf Dauer verbesserter Gesamtzustand der Anlage erreicht.

Dies führt zu einer Verlängerung der gesamten Einsatzdauer der Komponenten, einer erhöhten Zuverlässigkeit der gesamten Anlage und einer Senkung der Instandhaltungskosten.

Da sich der Verschleißzustand der Exzenterwellenlager direkt nicht ermitteln lässt, ohne die Anlage zu zerlegen, erfolgt die Ermittlung des Verschleißzustands indirekt durch eine Überwachung der Schwingungen des Systems mithilfe von mindestens einem Schwingungssensor. Der Sensor übermittelt die gemessenen Daten an ein übergeordnetes Überwachungssystem, das die Daten abspeichert und auswertet.

Diagnoseereignisse werden durch kontinuierliche oder zyklisch stattfindende Prüfläufe und Parameterüberwachungen generiert. Des Weiteren generiert das Diagnosesystem beispielsweise eine Staffelung des erreichten Bauteilverschleißes in einer Ampelausleuchtung:
- Zustand "grün" - überwachtes Systemelement innerhalb zulässiger Grenzwerte, kein Handlungsbedarf erforderlich,
- Zustand "gelb" - überwachtes Systemelement innerhalb zulässiger Grenzwerte, Handlungsbedarf einplanen und ggf. ausführen,
- Zustand "rot" - überwachtes Systemelement außerhalb zulässiger Grenzwerte, Handlungsbedarf erforderlich.

Im Diagnoserechner können unter Verwendung der erfassten Prozesswerte und Eingangsgrößen die projektierten Diagnoseereignisse gebildet werden.

Das Ereignismanagement organisiert die weitere Behandlung der vorhandenen Diagnosedaten, wie z.B.:
- Auslösen der vorgesehenen Anzeigen,
- automatisches Auslösen der vorgesehenen Datenfernübertragung (DFÜ),
- Organisation der Archivierung im Historienspeicher des Diagnoserechners,
- Zusammenstellung der Daten, die durch eine DFÜ übertragen werden,
- Aufbau und Überwachung der DFÜ-Verbindung zu den stationären DV-Systemen. Kommt es während einer DFÜ zu einem Verbindungsabbruch, so wird der Prozess der DFÜ fahrzeugseitig sicher beendet und wiederholt. Durch Prüfmechanismen wird sichergestellt, dass die Kommunikation von und zum Fahrzeug ohne Datenverlust erfolgt.
- Löschen von Alarmanzeigen durch manuelles Rücksetzen des Fehlerspeichers.

Im Historienspeicher werden alle generierten Ereignisse in Form von Datensätzen nichtflüchtig gespeichert.

Das Diagnosesystem kann außerdem betriebsrelevante Diagnoseereignisse, sowie Prozesswerte und Betriebsdaten generieren und an ein stationäres Anwendersystem versenden.

Um sämtliche, die eigentliche Schwingungsmessung überlagernden Schwingungen des Stopfaggregates auszublenden, verfügt die Vorrichtung gemäß Anspruch 1 über geeignete Triggerbedingungen für die Durchführung der Messungen des v_rms Wertes der Schwinggeschwindigkeit und des a_rms-Wertes der Schwingbeschleunigung.

Grundvoraussetzung zur Durchführung der Schwingungsmessung sind außerhalb des Schotterbettes befindliche Stopfpickel und der eingeschaltete Vibrationsantrieb des entsprechenden Exzenterwellenantriebs. Dementsprechend werden die Betriebszustände "Vibration Exzenterwellenantrieb ein" und "Stopfkasten Position oben" aus der Steuerung der Maschine abgegriffen und der Schwingungsmesseinheit über ein Verknüpfungsmodul als Trigger-Signal (Freigabe A_2) für den Start der Schwingungsmessung zur Verfügung gestellt.

Die Messung kann von da an solange erfolgen, wie die Freigabebedingung erfüllt ist, das heißt, solange, wie die Betriebszustände "Vibration Exzenterwellenantrieb ein" und "Stopfkasten Position oben" gültig bleiben.

Je nach Betriebsbedingungen der Gleisstopfmaschine variiert die zeitliche Dauer der Freigabebedingung. Beim kontinuierlichen Durcharbeiten des Gleises liegt sie nur im Bereich von Zehntelsekunden an, beim diskontinuierlichen Durcharbeiten z.B. von Weichen kann sie über einen Zeitraum von mehreren Sekunden anstehen. Dementsprechend ist die Zeit, die für eine vollständige Schwingungsmessung benötigt wird, diesen Rahmenbedingungen angepasst. Sobald die Freigabebedingung nicht mehr erfüllt ist, wird der Messprozess abgebrochen und bei der nächsten anstehenden Freigabebedingung wieder gestartet.

Bei Vorliegen der Freigabedingung (Freigabe A_2) wird der RMS-Wert der Schwinggeschwindigkeit (v_rms) gemessen. Für die Messung des RMS-Werts der Schwingbeschleunigung (a_rms) ist als Freigabesignal die Bedingung Arbeitsbetrieb ein (Freigabe A_1) definiert.

Gemäß Anspruch 2 misst die erfindungsgemäße Vorrichtung bei Vorliegen der Freigabebedingung "Vibration Exzenterwellenantrieb ein" und "Stopfkasten Position oben" (Freigabe A_2) folgende Spektren einmal täglich und/oder bei Überschreiten der variabel einstellbaren Alarmschwellen für v_rms und/oder a_rms.
- Spektrum der Schwinggeschwindigkeit, v ,
- Spektrum der Schwingbeschleunigung, a,
- Hüllkurvenspektrum, HK.

Der Diagnoserechner nimmt diese Spektren auf und speichert sie ab.

Gemäß Anspruch 3 ermöglicht der Diagnoserechner aus den gewonnenen Daten die Ableitung zustandsbezogener Maßnahmen zur Wartung und Instandsetzung der Gleisstopfmaschine.

Durch Auswertung der Änderungsverläufe der gewonnenen Daten kann gemäß Anspruch 4 auf den Verschleißzustand der Exzenterwellenlager geschlossen werden.

Besonders vorteilhaft ist es, wenn das Diagnosesystem gemäß Anspruch 5 aufgrund eines sehr schnellen Anstiegs des Verschleißes erkennt, dass ein Schaden unmittelbar bevorstehen kann. In diesem Fall können weitere Maßnahmen eingeleitet werden, bevor es zu einem Ausfall und/öder Folgeschäden kommt.

Die Erfindung wird nachstehend anhand eines Beispiels und einer Figur erläutert.

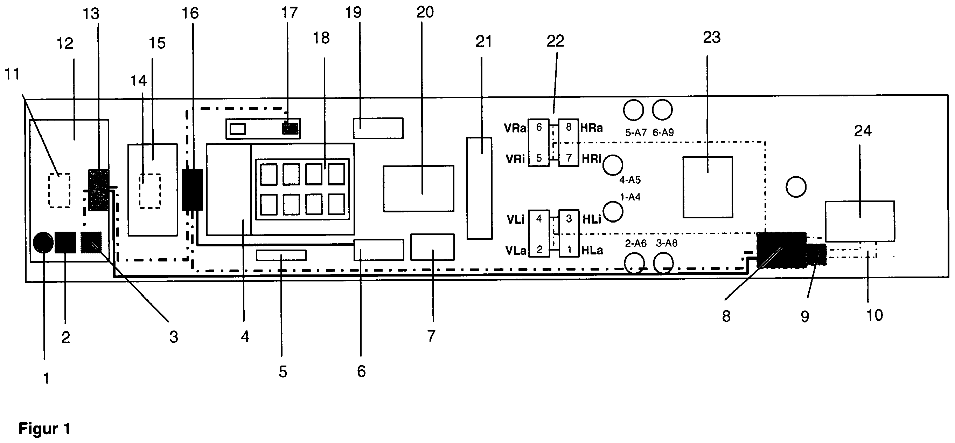

Die **Figur 1** zeigt schematisch eine Gleisstopfmaschine mit Stopfpickeln, Antrieb, Exzenterwelle und Exzenterwellenlager, sowie der Lagerdiagnosevorrichtung bestehend aus der Schwingungsmessvorrichtung mit Schwingungsaufnehmern, Verbindungsmodul, Schwingungsmesseinheit und Diagnoserechner.

Im Beispielfall ist je Exzenterwellenantrieb ein Schwingungsaufnehmer am Lagerbock des Antriebes platziert. Von dem an dem Schwingungsaufnehmer angeschlossenen Messsystem wird der v_rms Wert der Schwinggeschwindigkeit sowie der a_rms Wert der Schwingbeschleunigung aufgezeichnet.

Um sämtliche, die eigentliche Schwingungsmessung überlagernden Schwingungen des Stopfaggregates auszublenden, werden die Betriebszustände "Vibration Exzenterwellenantrieb ein" und "Stopfkasten Position oben" von einem Verknüpfungsmodul in Form von Spannungswerten aus der Steuerung der Maschine abgegriffen und dem Schwingungsmesssystem als Trigger-Signal (Freigabe A_2) für den Start der Messung v_rms zur Verfügung gestellt.

Die Messung erfolgt von da an solange, wie die Freigabebedingung erfüllt ist, das heißt, solange, wie die Betriebszustände "Vibration Exzenterwellenantrieb ein" und "Stopfkasten Position oben" gültig bleiben.

Je nach Betriebsbedingungen der Gleisstopfmaschine variiert die zeitliche Dauer der Freigabebedingung. Beim kontinuierlichen Durcharbeiten des Gleises liegt sie nur im Bereich von Zehntelsekunden an, beim diskontinuierlichen Durcharbeiten z.B. von Weichen kann sie über einen Zeitraum von mehreren Sekunden anstehen. Dementsprechend ist die Zeit, die für eine vollständige Schwingungsmessung benötigt wird, diesen Rahmenbedingungen angepasst. Sobald die Freigabebedingung nicht mehr erfüllt ist, sendet das Verknüpfungsmodul einen Triggerpuls zum Beenden der Messung. Der Messprozess wird abgebrochen und erst wieder bei der nächsten anstehenden Freigabebedingung gestartet.

Die Messung des a_rms Wertes wird nach Vorliegen der Freigabebedingung "Arbeitsbetrieb ein" (Freigabe A_1) gestartet und solange kontinuierlich wiederholt bis die Freigabe A_1 nicht mehr ansteht.

Die Schwingungsmesseinheit übermittelt die Messdaten an einen übergeordneten Diagnoserechner. Der Diagnoserechner speichert die Daten und wertet sie aus.

Außerdem nimmt der Diagnoserechner einmal täglich bei Vorliegen der Freigabebedingung (Freigabe A_2) "Vibration Exzenterwellenantrieb ein" und "Stopfkasten Position oben" folgende Spektren auf:
- Spektrum der Schwinggeschwindigkeit, v - 1 kHz,
- Spektrum der Schwingbeschleunigung, a - 10 kHz,
- Hüllkurvenspektrum, HK - 1 kHz.

Der Diagnoserechner nimmt diese Spektren auf, speichert sie ab und stellt sie in grafischer Form für die Auswertung bereit. Die Spektren werden darüber hinaus auch dann aufgenommen, wenn eine Überschreitung der eingestellten Grenzwerte v_rms und/oder a_rms (z.B.: v_rms = 45 mm/s, a_rms = 60m/s²) vorliegt.

Aus den gewonnenen Daten ermöglicht der Diagnoserechner Rückschlüsse auf den Verschleiß der Exzenterwellenlager und die Ableitung zustandsbezogener Maßnahmen zur Wartung und zur Instandsetzung zu generieren. Falls der Verschleiß einen bestimmten Grenzwert erreicht, meldet der Diagnoserechner einen entsprechenden Wartungsbedarf.

Nach Überschreiten des Grenzwertes kann durch Auswertung der aufgenommenen Spektren eine Tiefendiagnose des Lagerzustandes (Zustand des Innen-bzw. Außenringes bzw. der Wälzkörper) durchgeführt werden.

Durch Auswertung der Änderungsverläufe der gewonnenen Daten kann auf den Verschleißzustand der Exzenterwellenlager geschlossen werden.

Des Weiteren generiert der Diagnoserechner insbesondere eine Staffelung des erreichten Bauteilverschleißes in einer Ampelausleuchtung:
- Zustand "grün" - überwachtes Systemelement innerhalb zulässiger Grenzwerte, kein Handlungsbedarf erforderlich,
- Zustand "gelb" - überwachtes Systemelement innerhalb zulässiger Grenzwerte, Handlungsbedarf einplanen und ggf. ausführen,
- Zustand "rot" - überwachtes Systemelement außerhalb zulässiger Grenzwerte, Handlungsbedarf erforderlich.

Das Ereignismanagement organisiert die weitere Behandlung der vorhandenen Diagnosedaten:
- Auslösen der vorgesehenen Anzeigen,
- automatisches Auslösen der vorgesehenen Datenfernübertragung (DFÜ),
- Organisation der Archivierung im Historienspeicher des Diagnoserechners,
- Zusammenstellung der Daten, die durch eine DFÜ übertragen werden,
- Aufbau und Überwachung der DFÜ-Verbindung zu den stationären DV-Systemen. Kommt es während einer DFÜ zu einem Verbindungsabbruch, so wird der Prozess der DFÜ fahrzeugseitig sicher beendet und wiederholt. Durch Prüfmechanismen wird sichergestellt, dass die Kommunikation von und zum Fahrzeug ohne Datenverlust erfolgt.
- Löschen von Alarmanzeigen durch manuelles Rücksetzen des Fehlerspeichers.

Im Historienspeicher werden alle generierten Ereignisse in Form von Datensätzen gespeichert.

Der Diagnoserechner generiert und versendet betriebsrelevante Diagnoseereignisse, sowie Prozesswerte und Betriebsdaten an ein stationäres Anwendersystem, in welchem die Datensätze nichtflüchtig gespeichert werden.

### Bezugszeichenliste

- 1: Diagnosesystem GSM/GPS-Antenne
- 2: Diagnosesystem GPS-Verstärker
- 3: Diagnosesystem Kompass
- 4: Kühler Diesel HM
- 5: Pneumatik System
- 6: Lichtmaschinen
- 7: Kühler Lastschaltgetriebe
- 8: Diagnoserechner
- 9: Verknüpfungsmodul
- 10: Steuersignale "Stopfkasten oben", "Vibrationsantrieb ein", "Arbeitsbetrieb ein"
- 11: Radsatzgetriebe 1
- 12: Fahrerkabine HM
- 13: Diagnosesystem Schaltschrank
- 14: Radsatzgetriebe 2
- 15: Reservetank
- 16: Diagnosesystem Spannungsversorgung
- 17: Diagnosesystem Trennverstärker
- 18: Dieselmotor HM
- 19: Batterie HM
- 20: Lastschaltgetriebe
- 21: Hydrauliktank
- 22: Stopfkasten-Exzenterwellenlager mit Schwingungssensoren
- 23: Arbeitsplatz Stopfer
- 24: Hauptschaltschränke

## Patentansprüche

1. Vorrichtung zur Lagerdiagnose an Exzenterwellen von Gleisstopfmaschinen mittels einer Schwingungsmessvorrichtung mit Schwingungsaufnehmern, **dadurch gekennzeichnet, dass** ein Verknüpfungsmodul (9) zwischen der Steuerung der Gleisstopfmaschine und der Schwingungsmesseinrichtung die Betriebszustände (10) "Vibration Exzenterwellenantrieb ein" und "Stopfkastenposition oben", einem Zustand bei dem die durch die Exzenterwellen angetriebenen Stopfpickel der Stopfmaschine sich außerhalb des Schotterbettes befinden, aus der Steuerung der Gleisstopfmaschine abgreift und der Schwingungsmesseinrichtung als Triggersignal (Freigabe A_2) für den Start der Messung des RMS-Wertes der Schwinggeschwindigkeit (v_rms) und den Betriebszustand "Arbeitsbetrieb ein" als Triggersignal (Freigabe A_1) für den Start der Messung des RMS-Wertes der Schwingbeschleunigung (a_rms) zur Verfügung stellt, und sobald die aus der Steuerung der Gleisstopfmaschine abgegriffenen Triggersignale A_2 und/oder A_1 als nicht mehr gültig charakterisiert werden, dies als Triggersignal für das Ende der Messung zur Verfügung stellt.

2. Vorrichtung zur Lagerdiagnose an Exzenterwellen von Gleisstopfmaschine mittels einer Schwingungsmessvorrichtung mit Schwingungsaufnehmern nach Anspruch 1, **dadurch gekennzeichnet, dass** die Vorrichtung bei Vorliegen der Freigabebedingung "Vibration Exzenterwellenantrieb ein" und "Stopfkasten Position oben" (Freigabe A_2) folgende Spektren einmal täglich und/oder bei Überschreitung von Alarmschwellen für RMS-Wertes der Schwinggeschwindigkeit und/oder RMS-Wertes der Schwingbeschleunigung misst,
- Spektrum der Schwinggeschwindigkeit, v,
- Spektrum der Schwingbeschleunigung, a,
- Hüllkurvenspektrum, HK,
und das Diagnosesystem diese Spektren aufnimmt, abspeichert und nach Übertragung mittels Datenfernübertragung an das stationäre Auswertesystem zur Auswertung visualisiert.

3. Vorrichtung zur Lagerdiagnose an Exzenterwellen von Gleisstopfmaschinen mittels der Schwingungsmessvorrichtung mit Schwingungsaufnehmern nach mindestens einem der vorigen Ansprüche, **dadurch gekennzeichnet, dass** das stationäre Auswertesystem aus den gewonnenen Daten die Ableitung von zustandsbezogenen Maßnahmen zur Wartung und Instandsetzung ermöglicht.

4. Vorrichtung zur Lagerdiagnose an Exzenterwellen von Gleisstopfmaschinen mittels einer Schwingungsmessvorrichtung mit Schwingungsaufnehmern nach mindestens einem der vorigen Ansprüche, **dadurch gekennzeichnet, dass** das stationäre Auswertesystem durch Auswertung der Änderungsverläufe der gewonnen Daten die Ermittlung des Verschleißzustands der Exzenterwellenlager ermöglicht.

5. Vorrichtung zur Lagerdiagnose an Exzenterwellen von Gleisstopfmaschinen mittels einer Schwingungsmessvorrichtung mit Schwingungsaufnehmern nach mindestens einem der vorigen Ansprüche, **dadurch gekennzeichnet, dass** das Diagnosesystem sofortige Schutzmaßnahmen einleitet, falls das Ausmaß des gemessenen Verschleißes der Exzenterwellenlager innerhalb kurzer Zeit ansteigt und/oder die eingestellte Grenzwertschwelle überschreitet.

## Claims

1. Device for bearing diagnosis on eccentric shafts of track tamping machines using a vibration measuring device having vibration sensors, **characterised in that** a logic module (9), between the control system of the track tamping machine and the vibration measuring device, taps the operating states (10) "eccentric shaft drive vibration on" and "tamping box position up", a state in which the tamping picks of the tamping machine driven by the eccentric shafts are located outside the ballast bed, from the control system of the track tamping machine, and provides the vibration measuring device with (release A_2) as the trigger signal for starting the measurement of the RMS value of the vibration velocity (v_rms) and the operating state "working mode on" as the trigger signal (release A_1) for starting the measurement of the RMS value of the vibration acceleration (a_rms), and as soon as the trigger signals A_2 and/or A_1 tapped from the control system of the track tamping machine are characterised as no longer valid, makes this available as the trigger signal for ending the measurement.

2. Device for bearing diagnosis on eccentric shafts of track tamping machines using a vibration measuring device having vibration sensors according to claim 1, **characterised in that** the device measures the following spectra once daily and/or when alarm thresholds for RMS values of the vibration velocity and/or RMS values of the vibration acceleration are exceeded when the release conditions "eccentric shaft drive vibration on" and "tamping box position up" (release A_2) are met:
- spectrum of the vibration velocity, v,
- spectrum of the vibration acceleration, a,
- envelope spectrum, HK,
and the diagnosis system records these spectra, saves them and visualises them for evaluation after transmission by means of remote data transmission to the stationary evaluation system.

3. Device for bearing diagnosis on eccentric shafts of track tamping machines using the vibration measuring device having vibration sensors according to at least one of the preceding claims, **characterised in that** the stationary evaluation system makes it possible to derive condition-related measures for maintenance and repair from the data obtained.

4. Device for bearing diagnosis on eccentric shafts of track tamping machines using a vibration measuring device having vibration sensors according to at least one of the preceding claims, **characterised in that** the stationary evaluation system enables the state of wear of the eccentric shaft bearings to be determined by evaluating the change histories of the data obtained.

5. Device for bearing diagnosis on eccentric shafts of track tamping machines using a vibration measuring device having vibration sensors according to at least one of the preceding claims, **characterised in that** the diagnosis system initiates immediate protective measures if the extent of the measured wear of the eccentric shaft bearings increases within a short time and/or exceeds the set limit value threshold.

## Revendications

1. Dispositif destiné au diagnostic de palier au niveau d'arbres excentriques de bourreuses de traverses au moyen d'un dispositif de mesure d'oscillations avec amortisseurs,
**caractérisé en ce qu**'un module de combinaison (9) entre la commande de la bourreuse de traverses et le dispositif de mesure d'oscillations prélève de la commande de la bourreuse de traverses les états de fonctionnement (10) "vibration entraînement d'arbre excentrique en marche" et "caisse de bourrage en position haute", un état dans lequel les pics de bourrage de la bourreuse entraînés par les arbres excentriques se trouvent à l'extérieur du lit de ballast, et les met à disposition du dispositif de mesure d'oscillations comme signal de déclenchement (libération A_2) pour le démarrage de la mesure de la valeur RMS de la vitesse d'oscillation (v_rms) et met à disposition l'état de fonctionnement "travail en cours" comme signal de déclenchement (libération A_1) pour le démarrage de la mesure de la valeur RMS de l'accélération d'oscillation (a_rms) et, dès que les signaux de déclenchement A_2 et/ou A_1 prélevés de la commande de la bourreuse de traverses sont caractérisés comme n'étant plus valables, met à disposition ce fait comme signal de déclenchement pour la fin de la mesure.

2. Dispositif destiné au diagnostic de palier au niveau d'arbres excentriques de bourreuses de traverses au moyen d'un dispositif de mesure d'oscillations avec amortisseurs selon la revendication 1,
**caractérisé en ce que** le dispositif, en présence de la condition de libération "vibration entraînement d'arbre excentrique en marche" et "caisse de bourrage en position haute" (libération A_2), mesure les spectres suivants une fois par jour et/ou en cas de dépassement de seuils d'alerte pour des valeurs RMS de la vitesse d'oscillation et/ou pour des valeurs RMS de l'accélération d'oscillation :
- spectre de la vitesse d'oscillation, v,
- spectre de l'accélération d'oscillation, a,
- spectre de courbe enveloppante, HK,
et **en ce que** le système de diagnostic reçoit ces spectres, les mémorise et les visualise en vue de leur évaluation après transmission au système d'évaluation stationnaire au moyen d'une télétransmission de données.

3. Dispositif destiné au diagnostic de palier au niveau d'arbres excentriques de bourreuses de traverses au moyen du dispositif de mesure d'oscillations avec amortisseurs selon au moins l'une des revendications précédentes,
**caractérisé en ce que** le système d'évaluation stationnaire permet, à partir des données obtenues, la déduction de dispositions à prendre, se rapportant à l'état, en vue de la maintenance et de la réparation.

4. Dispositif destiné au diagnostic de palier au niveau d'arbres excentriques de bourreuses de traverses au moyen d'un dispositif de mesure d'oscillations avec amortisseurs selon au moins l'une des revendications précédentes,
**caractérisé en ce que** le système d'évaluation stationnaire permet, en évaluant les allures de variation des données obtenues, la détermination de l'état d'usure des paliers d'arbres excentriques.

5. Dispositif destiné au diagnostic de palier au niveau d'arbres excentriques de bourreuses de traverses au moyen d'un dispositif de mesure d'oscillations avec amortisseurs selon au moins l'une des revendications précédentes,
**caractérisé en ce que** le système de diagnostic déclenche des mesures de protection immédiates si l'importance de l'usure mesurée des paliers d'arbres excentriques augmente en peu de temps et/ou dépasse le seuil de valeur limite réglé.
